# EUROPÄISCHE PATENTANMELDUNG

(11) **EP 0 909 066 A2**
(43) Veröffentlichungstag der Anmeldung: **14.04.1999**
(21) Anmeldenummer: 98118498.9
(22) Anmeldetag: 30.09.1998
(51) Int. Cl.: H04L 25/49, H03M 1/00

(54) **Vorrichtung und Verfahren zum Einstellen der Quantisierungskennlinien einer PCM-Codierung**

(30) Priorität: 13.10.1997 DE 19745255
(71) Anmelder: SIEMENS AKTIENGESELLSCHAFT, 80333 München (DE)
(72) Erfinder: Caldera, Peter, 9500 Villach (AT); Frenzel, Rudi, Dr., 81735 München (DE); Höfer, Gerald, 86853 Langerringen (DE)

(57) **Zusammenfassung**

Es ist eine Teilnehmeranschlußvorrichtung, ein Modem, ein Telekommunikationssystem und ein Verfahren in einem Telekommunikationssystem offenbart, bei dem Elemente, im Kommunikationssystem, die sich auf die Quantisierung analoger Signale beziehen, umschaltbar sind. Nach ITU-G.711 wird herkömmlicherweise bei der Quantisierung eine logarithmische Kennlinie verwendet. Nach der Erfindung ist eine Umschaltbarkeit in eine lineare Quantisierungskennlinie vorgesehen. Dies hat insbesondere Vorteile bei der Verwendung einer Pulsamplitudenmodulation zwischen zwei Teilnehmerendstellen des Kommunikationssystems. Die Verwendung linearer Quantisierungskennlinien ermöglicht eine bessere Ausnutzung verfügbarer Quantisierungscodes bei der Pulsamplitudenmodulation.

## Beschreibung

Die Erfindung betrifft eine Teilnehmeranschlußvorrichtung nach dem Oberbegriff von Patentanspruch 1, ein Modern nach dem Oberbegriff vom Patentanspruch 6, ein Verfahren zum Einstellen einer PCM-Codierung mit unterschiedlichen Quantisierungskennlinien nach Patentanspruch 9 und ein Telekommunikationssystems nach Patentanspruch 12.

In den letzten Jahren sind erhebliche Fortschritte hinsichtlich der Datenübertragungsraten bei der Datenübertragung über das herkömmliche analoge Sprachtelefonnetz erzielt worden. In diesem Zusammenhang wurden technische Standards entwickelt, die von der International Telecommunication Union (ITU) unter der Bezeichnung V.32, V.32bis und V.34 verabschiedet und veröffentlicht wurden. Die Verfahren zur Datenübertragung zwischen zwei Modems, die jeweils an eine analoge Teilnehmerleitung des weltweiten Telefonnetzes angeschlossen sind, beruht auf einer Quadraturamplitudenmodulation (QAM). Die QAM hat sich als besonders vorteilhaft erwiesen, weil zu den jeweiligen Teilnehmern eine analoge Verbindung besteht, über die Signale mit QAM übertragen werden können.

Nichtsdestotrotz ist das Telefonsystem selbst mittlerweile weitgehend digital aufgebaut. Das heißt, im Vermittlungsamt eines ersten Teilnehmers werden die ankommenden analogen Signale vom Teilnehmer in digitale Signale umgewandelt und im Telefonsystem weiter transportiert. Im Vermittlungsamt des zweiten Teilnehmers der Datenkommunikationsverbindung werden die digitalen Signale wieder in analoge Signale gewandelt, um über die analoge Teilnehmerleitung des zweiten Teilnehmers der Datenkommunikationsverbindung gesendet zu werden. Dort werden die analogen Signale entsprechend der QAM demoduliert, um daraus die vom Datenendgerät des ersten Teilnehmers gesendeten Daten zu gewinnen.

In der entgegengesetzten Kommunikationsrichtung erfolgt die Signalübertragung vom zweiten Teilnehmer zum ersten Teilnehmer in entsprechender Weise.

Zunehmend sind jedoch Teilnehmer über digitale Schnittstellen, wie etwa einem ISDN-Anschluß, mit dem Telekommunikationsnetz verbunden. Es kommt daher immer häufiger zu Verbindungen, bei denen ein erster Teilnehmer über die herkömmliche analoge Schnittstelle mit dem Telekommunikationsnetz verbunden ist und ein zweiter Teilnehmer über eine digitale Schnittstelle mit dem Telekommunikationsnetz verbunden ist. Zur Optimierung der Datenübertragungsraten in einer derartigen Konstellation sind bereits zahlreiche Vorschläge gemacht worden. Ein Vorschlag ist beispielsweise aus der WO 96/18261 bekannt geworden.

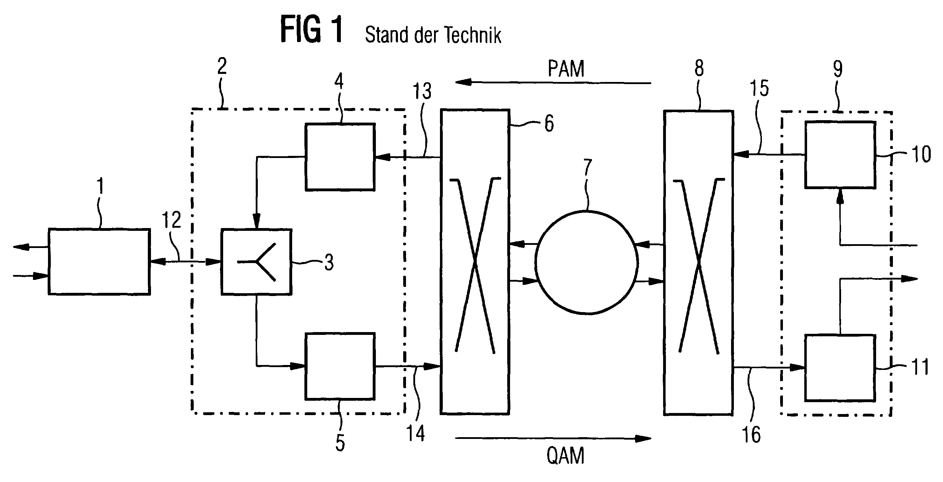

Figur 1 zeigt prinzipiell eine Lösung, wie sie beispielsweise aus der obengenannten Veröffentlichung bekannt ist. Es ist ein erstes Teilnehmerendgerät 1 über eine analoge Teilnehmerleitung 12 mit einer Teilnehmeranschlußvorrichtung 2 in einem Vermittlungsamt eines Telekommunikationssystems verbunden. Andererseits ist ein zweites Teilnehmerendgerät 9 über eine digitale Verbindung, dargestellt durch die Signalleitungen 15 und 16, mit einer Vermittlungsstelle 8 in einem Vermittlungsamt des zweiten Teilnehmers verbunden.

Wie mittlerweile in den meisten Vermittlungsämtern üblich, wird die analoge Teilnehmerleitung 12 über die Teilnehmeranschlußvorrichtung 2 und die digitalen Leitungen 13 und 14 mit einer Vermittlungsstelle 6 verbunden. Die digitalen Vermittlungsstellen 6 und 8 sind ihrerseits über das weltweite digitale Telefonnetz 7 miteinander verbunden. Somit können digitale Daten von der Signalleitung 15 des zweiten Teilnehmers zur Signalleitung 13 bei der Teilnehmeranschlußvorrichtung 2 des ersten Teilnehmers digitale Daten transparent übertragen werden. Entsprechendes gilt für die Übertragung digitaler Signale von der Signalleitung 14 von der Teilnehmeranschlußvorrichung 2 des ersten Teilnehmers zur Signalleitung 16 des zweiten Teilnehmers.

Innerhalb der Teilnehmeranschlußvorrichtung 2 findet in einer Leitungsanpassungseinrichtung 4 eine D/A-Wandlung der von der Signalleitung 13 kommenden Daten in analoge Signale statt, die einer Gabelschaltung 3 zugeführt werden, um sie auf die analoge Zweidrahtleitung 12 des ersten Teilnehmers zu legen. Umgekehrt werden die von der Teilnehmerleitung 12 kommenden analogen Signale von der Gabelschaltung 3 auf die zweite Leitungsanpassungeinrichtung 5 gelegt, die diese in digitale Signale wandelt, um sie auf die Signalleitung 14 zu legen.

Gegenüber dem bisherigen Verfahren der Datenmodulation unterscheidet sich dieses Verfahren dadurch, daß in der Kommunikationsrichtung vom digital angeschlossenen zweiten Teilnehmerendgerät 9 zum analog angeschlossenen ersten Teilnehmergerät 1 eine Pulsamplitudenmodulation (PAM)eingesetzt wird, und in umgekehrter Kommunikationsrichtung vom analog angeschlossenen ersten Teilnehmerendgerät 1 zum digital angeschlossenen zweiten Teilnehmerendgerät 9 die bisherige Quadraturamplitudenmodulation weiter verwendet wird. Die technischen Grundlagen der Verwendung der Pulsamplitudenmodulation zur Datenübertragung in Telekommunikationsnetzen sind beispielsweise in der obengenannten Patentveröffentlichung WO 96/18261 ausführlich erläutert.

Von entscheidender Bedeutung bei der Pulsamplitudenmodulation ist die Anzahl zur Verfügung stehender Quantisierungsstufen und die Anordnung der Quantisierungsstufen. Wie bereits im Abschnitt "Line Interface" von Seite 19 auf Seite 20 und im Abschnitt "Use with other Telephonesystems" auf Seite 40 obiger Veröffentlichung ausführlich erläutert ist, erfolgt die Quantisierung analoger Signale in den meisten Telefonnetzen nach einer logarithmischen Kennlinie, wie sie in dem Standard G.711 der ITU festgelegt ist. Es werden dabei zwei unterschiedliche Quantisierungskennlinien eingesetzt, die als das A-Gesetz bzw. µ-Gesetz bezeichnet werden. Bei dem in Figur 1 dargestellten System erfolgt eine Quantisierung im D/A-Wandler 4 und im A/D-Wandler 5. Die logarithmische Quantisierungkennlinie bewirkt, daß relativ viele Quantisierungsstufen bei keinen Amplitudenwerten vorliegen, und weniger Quantisierungsstufen für größere Amplitudenwerte zur Verfügung stehen. Dies trifft sowohl auf das A-Gesetz als auch das µ-Gesetz zu. Bei der herkömmlichen Sprachübertragung im Telefonsystem ist eine derartige logarithmische Quantisierungskennlinien vorteilhaft, weil dadurch der Signal/Rausch-Abstand auf ein Minimum reduziert werden kann. Für die Pulsamplitudenmodulation ist dies jedoch von Nachteil. Einerseits können Codes im Bereich großer Amplitudenstufen nicht mehr verwendet werden, weil dadurch nationale Vorschriften hinsichtlich der Leistungsabgabe verletzt würden, und andererseits können kleine Amplitudenwerten aufgrund Leitungsrauschens auf der analogen Strecke beim Empfänger unter Umständen nicht mehr eindeutig unterschieden werden. Daher können auch im Bereich kleiner Amplitudenwerte nicht alle möglichen Codes der Quantisierung der Pulsamplitudenmodulation verwendet werden.

Es ist daher die Aufgabe der vorliegenden Erfindung, das auf Pulsamplitudenmodulation beruhende Datenübertragungsprinzip hinsichtlich der Ausnutzung verfügbarer Quantisierungscodes zu verbessern.

Die Aufgabe wird gelöst mit einer Teilnehmeranschlußvorrichtung mit den Merkmalen vom Patenanspruch 1, einem Modem mit den Merkmalen vom Patenanspruch 6, einem Verfahren mit den Merkmalen vom Patentanspruch 9 und mit einem Telekommunikationssystem mit den Merkmalen vom Patenanspruch 12.

Eine bevorzugte Teilnehmeranschlußvorrichtung der Erfindung dient zur Verbindung einer Teilnehmerleitung mit einem Vermittlungssystem in einem Telekommunikationssystem. Die Teilnehmeranschlußvorrichtung weist vorzugsweise eine erste und eine zweite Leitungsanpassungseinrichtung für die jeweiligen Kommunikationsrichtungen auf, wobei die erste Leitungsanpassungseinrichtung einen D/A-Wandler mit logarithmischer Quantisierungskennlinie und die zweite Leitungsanpassungseinrichtung einen A/D-Wandler mit logarithmischer Quantisierungskennlinie aufweist. Der D/A-Wandler und der A/D-Wandler sind analogseitig über eine Gabelschaltung, die der Zweidraht-Vierdraht Umsetzung dient, mit der Teilnehmerleitung verbunden. Die Teilnehmeranschlußvorrichtung ist dadurch gekennzeichnet, daß wenigsten die erste Leitungsanpassungseinrichtung wahlweise in einen Betrieb mit linearer Quantisierungskennlinie umschaltbar ist. Eine derartige Anordnung hat den Vorteil, daß für Signale, die vom Vermittlungssystem in Richtung auf den ersten Teilnehmer übertragen werden sollen, eine Pulsamplitudenmodulation nicht mit der herkömmlichen logarithmischen Quantisierungskennlinie durchgeführt wird, sondern mit einer linearen Quantisierungskennlinie durchgeführt wird, die eine bessere Ausnutzung der verfügbaren Quantisierungscodes erlaubt. In der entgegengesetzten Kommunikationsrichtung wird vorzugsweise die logarithmischen Quantisierungskennlinie beibehalten, um in dieser Richtung eine herkömmliche Quadraturamplitudenmodulation durchführen zu können.

Es wird besonders bevorzugt, daß die erste Leitungsanpassungseinrichtung einen linearen D/A-Wandler mit vorgeschalteter erster Umsetzeinrichtung aufweist, die zwischen linearer und logarithmischer Kennlinie umschaltbar ist. Vorteilhafterweise weist dazu der lineare D/A-Wandler eine höhere Bitbreite auf, als die Bitbreite, die vom Vermittlungssystem an die Umsetzeinrichtung geliefert wird (die durch Standardisierung auf 8 Bit festgelegt ist). Der D/A-Wandler weist dazu eine Bitbreite von 12 - 16 Bit auf.

Es wird weiterhin bevorzugt, daß die Teilnehmeranschlußvorrichtung eine Erkennungseinrichtung aufweist, die die Datenkommunikation durch die Teilnehmeranschlußvorrichtung überwacht. Dadurch ist es möglich, aus den zwischen den Teilnehmer ausgetauschten Daten, bestimmte Informationen zu gewinnen, die sich auf bestimmte Datenkommunikationsparameter beziehen. Es ist daher besonders bevorzugt, daß die Erkennungseinrichtung die von den Teilnehmern ausgetauschten digitalen Daten daraufhin untersucht, ob von den Teilnehmerendstellen eines Kommunikationskanals eine lineare oder eine logarithmischer Quantisierungskennlinie vereinbart wird. Es wird besonders bevorzugt, die Quantisierungkennlinie von zumindest der ersten Leitungsanpassungseinrichtung abhängig vom Ergebnis der Erkennungseinrichtung einzustellen. Dazu gibt die Erkennungseinrichtung nach Erkennung einer entsprechenden Datenkommunikation ein Signal an die erste Leitungsanpassungseinrichtung, die dieses vorzugsweise an die Umsetzungseinrichtung übergibt.

Ein bevorzugtes Modem gemäß dieser Erfindung dient zur Verbindung einer Teilnehmerleitung eines Telekommunikationssystems mit einem Datenendgerät, beispielsweise einem Computer, eines Teilnehmers. Das bevorzugte Modem weist eine erste und eine zweite Leitungsanpassungseinrichtung für die jeweiligen Kommunikationsrichtungen auf, wobei die erste Leitungsanpassungseinrichtung einen D/A-Wandler mit linearer Quantisierungskennlinie und die zweite Leitungsanpassungseinrichtung einen A/D-Wandler mit linearer Quantisierungskennlinie aufweist. Der D/A-Wandler und der A/D-Wandler sind analogseitig über eine Gabelschaltung, die die Zweidraht-Vierdraht-Umsetzung ausführt, mit der Teilnehmerleitung verbunden. Das bevorzugte Modem ist dadurch gekennzeichnet, daß eine dem A/D-Wandler nachgeschaltete Signalverarbeitung in einen Betrieb für Ahalogsignale mit linearer Quantisierungskennlinie umschaltbar ist. Ein derartiges Modem ist besonders vorteilhaft in Verbindung mit einer obigen Teilnehmeranschlußvorrichtung in einem Telekommunikationssystem einsetzbar. Es ist dann möglich, in der Kommunikationsrichtung von der Gegenstelle des Modems zum Modem eine Pulsamplitudenmodulation mit verbesserter Ausnutzung der zur Verfügung stehenden Quantisierungscodes auszuführen. Dies liegt daran, weil der A/D-Wandler in der zweiten Leitungsanpassungseinrichtung mit linearer Quantisierungskennlinie betreibbar ist.

In einem besonders bevorzugten Ausführungsbeispiel weist das Modem eine Einrichtung zum Verhandeln des Übertragungsmodus mit einer Gegenstelle auf. Die Einrichtung veranlaßt abhängig vom Verhandlungsergebnis einen entsprechenden Betrieb der Signalverarbeitung.

Das bevorzugte Verfahren der Erfindung eignet sich insbesondere für ein Telekommunikationssystem, an das eine Vielzahl von Teilnehmerendstellen über analoge oder digitale Teilnehmerendstellen angeschlossen ist. Das Verfahren dient zum Umschalten zwischen einer linearen und einer logarithmischen PCM-Codierung bei der digitalen Darstellung der Signale in einem Kommunikationskanal. Das Verfahren weist die Schritte des Einstellens einer PCM-Codierung (Pulse Code Modulation) mit logarithmischer Quantisierung in dem Kommunikationskanal, des Abhörens des Datenverkehrs zwischen den Teilnehmerendstellen des Kommunikationskanals und des Einstellens einer PCM-Codierung mit linearer Quantisierung bei Feststellung eines vorbestimmten Codewortes im Datenverkehr auf.

In einem bevorzugten Ausführungsbeispiels des Verfahrens folgt darauf der Schritt des Ausgebens eines Quittungssignals an die Teilnehmerendstellen. Es wird besonders bevorzugt das nach Beendigung der Verbindung zwischen den Teilnehmerendstellen und nach Abbau des Kommunikationskanals ein Schritt des Einstellens einer logarithmischen Kennlinie folgt.

Besonders bevorzugt wird die Einstellen einer logarithmischen Quantisierungskennlinie in nur einer Kommunikationsrichtung.

Damit ist es möglich, in dieser Richtung eine Pulsamplitudenmodulation von zu übertragenden Daten unter besonders guter Ausnutzung verfügbarer Quantisierungscodes durchzuführen.

Am bevorzugten Telekommunikationssystem sind über analoge oder digitale Teilnehmerschnittstellen eine Vielzahl von Teilnehmern angeschlossen. Ausgewählte Teilnehmerendstellen können über individuell einrichtbare Kommunikationskanäle miteinander in Kommunikation treten. Analoge Signale in den Kommunikationskanälen des Systems sind digital mit einer PCM-Codierung mit logarithmischer Quantisierungskennlinie dargestellt. Das bevorzugte Telekommunikationssystem ist dadurch gekennzeichnet, daß die Signale in den Kommunikationskanälen des Systems wahlweise, individuell in zumindest einer Kommunikationsrichtung in einen PCM-Codierung mit linearer Quantisierung darstellbar sind. Ein derartiges Telekommunikationssystem ist besonders dann vorteilhaft, wenn ein erster Teilnehmer über eine analoge Schnittstelle an das Telekommunikationssystem angeschlossen ist, und ein zweiter Teilnehmer über eine digitale Schnittstelle an das Telekommunikationssystem angeschlossen ist. Für die Kommunikationsrichtung vom zweiten Teilnehmer zum ersten Teilnehmer wird dann vorteilhafterweise eine PCM-Codierung mit linearer Quantisierung eingesetzt, um eine Pulsamplitudenmodulation mit besonders hoher Ausnutzung verfügbarer Quantisierungscodes bei der Datenübertragung einsetzen zu können.

Weitere Vorteile, Merkmale und Anwendungsmöglichkeiten der vorliegenden Erfindung ergeben sich aus der nachfolgenden Beschreibung von Ausführungsbeispielen in Verbindung mit der Zeichnung. In der Zeichnung zeigen:
- Figur 1: die Elemente eines Kommunikationskanals zwischen zwei Teilnehmern eines Telekommunikationssystem nach dem Stand der Technik;
- Figur 2: ein bevorzugtes Ausführungsbeispiel einer Teilnehmeranschlußvorrichtung nach der Erfindung und
- Figur 3: ein Diagramm zum Vergleich von linearen und logarithmischer Quantisierungskennlinien.

Figur 1 zeigt einen Kommunikationskanal zwischen einer ersten Teilnehmerendstelle 1 und einer zweiten Teilnehmerendstelle 9 in einem Telekommunikationssystem, wie es beispielsweise aus der bereits oben erläuterten WO 96/18261 hervorgeht. Die erste Teilnehmerendstelle 1 ist über eine analoge TeilnehmerLeitung 12 mit einer Teilnehmeranschlußvorrichtung 2 des Telekommunikationssystems verbunden. Die zweite Teilnehmerendstelle 9 ist über eine digitale Schnittstelle, dargestellt durch die Verbindungsleitungen 15 und 16, mit dem Telekommunikationssystem verbunden. Das Telekommunikationssystem seinerseits besteht ferner aus den Vermittlungsstellen 6 und 8, die über jeweils digitale Schnittstellen mit dem weltweiten Telefonsystem 7 verbunden sind. Die Teilnehmeranschlußvorrichtung 2 dient der Umsetzung der digitalen Darstellung der Signale in eine analoge Form, um sie auf der Teilnehmerleitung 12 übertragen bzw. empfangen zu können. Wie in der WO 96/18261 vorgeschlagen, eignet sich eine derartige Anordnung zur bidirektionalen Datenübertragung zwischen der ersten Teilnehmerendstelle 1 und der zweiten Teilnehmerendstelle 9, wobei für die Datenübertragung der zweiten Teilnehmerendstellen 9 zur ersten Teilnehmerendstelle 1 eine Pulsamplitudenmodulation verwendet wird, während für die Kommunikationsrichtung von der ersten Teilnehmerendstelle 1 in Richtung auf die zweite Teilnehmerendstelle 9 eine Quadraturamplitudenmodulation eingesetzt wird. Die zweite Teilnehmerendstelle 9 weist dazu einen PAM-Codierer 10 und einen QAM-Demodulator 11 auf.

Herkömmliche Teilnehmeranschlußvorrichtungen 2 setzen in den darin enthaltenen D/A- bzw. A/D-Wandlern logarithmische Quantisierungskennlinien ein, wie sie erforderlich sind, wenn die Teilnehmerendstelle 1 eine Sprachverbindung mit dem Telekommunikationssystem aufbaut. Die logarithmischer Quantisierungskennlinien sind im Standard G.711 der ITU-T standardisiert worden.

Es stellt sich jedoch heraus, daß logarithmische Quantisierungskennlinien zur Datenübertragung mittels Pulsamplitudenmodulation nicht optimal sind, weil dadurch nicht sämtliche Quantisierungscodes verwendet werden können.

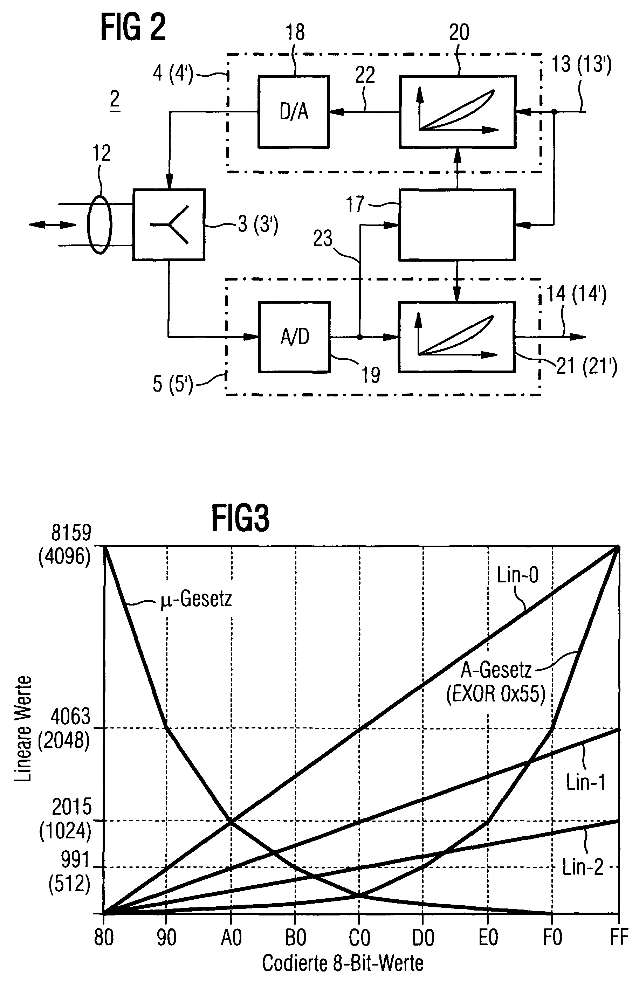

Figur 2 zeigt ein Ausführungsbeispiel einer Teilnehmeranschlußvorrichtung 2 nach der Erfindung. Die Teilnehmeranschlußvorrichtung 2 ist über eine Gabelschaltung 3 mit einer bidirektionalen Zweidraht-Teilnehmerleitung 12 verbunden. Die Gabelschaltung 3 ist mit der ersten Leitungsanpassungseinrichtung 4 und der zweiten Leitungsanpassungseinrichtung 5 verbunden, die jeweils eine D/A-Wandlung bzw. eine A/D-Wandlung auf die digitalen Verbindungsleitungen 13 bzw. 14 ausführen. Die Leitungsanpassungseinrichtung 4 weist einen linearen D/A-Wandler 18 mit einer Bitbreite von 12 - 16 Bit auf. Dem D/A- Wandler 18 ist digitalseitig eine Umsetzeinrichtung 20 vorgeschaltet, die den mit einer Bitbreite von 8 Bit von der Leitung 13 ankommenden PCM-Datenstrom durch eine Quantisierungstabelle auf die Leitung 22 mit einer Bitbreite von 12 - 16 Bit umsetzt. Die zweite Umsetzeinrichtung 20 benutzt dabei die im Standard G.711 vorgeschriebenen logarithmischer Quantisierungskennlinien.

Die zweite Leitungsanpassungseinrichtung 5 weist einen linearen A/D-Wandler 19 mit einer Bitbreite von 12 - 16 Bit auf. Digitalseitig ist dem A/D-Wandler 19 eine zweite Umsetzeinrichtung 21 nachgeschaltet, die den mit einer linearen Quantisierungskennlinien vorliegenden PCM-Datenstrom mit einer Bitbreite 12 - 16 Bit auf der Leitung 23 in PCM-Daten mit einer logarithmischen Quantisierungskennlinie mit einer Bitbreite von 8 Bit für die Leitung 14 umsetzt.

Erfindungsgemäß weist die Teilnehmeranschlußvorrichtung 2 eine Erkennungseinrichtung 17 auf, die den Datenverkehr auf der Leitung 23 und der Leitung 13 verfolgt, um daraus zu ermitteln, ob zwischen den Teilnehmerendstellen eines Kommunikationskanals eine Pulsamplitudenmodulation mit linearer Quantisierungskennlinie vereinbart wird. Wenn eine solche Vereinbarung erkannt wird, wird zumindest die erste Umsetzeinrichtung 20 angewiesen bei der Umsetzung der Bitbreite von 8 Bit auf der Leitung 13 auf die Bitbreite von 12 - 16 Bit auf der Leitung 22 eine lineare Quantisierungskennlinie einzustellen. Die zweite Umsetzeinrichtung 21 wird typischerweise auf die in dem jeweiligen Telekommunikationsnetz vorgeschriebenen logarithmischer Quantisierungskennlinie eingestellt, daß heißt entweder A-Gesetz oder µ-Gesetz.

Im ersten Teilnehmerendgerät 1, das oft auch als Modern bezeichnet wird, sind ebenfalls eine Gabelschaltung 3', eine erste Leitungsanpassungseinrichtung 4' und eine zweite Leitungsanpassungseinrichtung 5' vorgesehen. Diese Komponenten im Modem 1 sind funktionssymmetrisch zu den Komponenten der Teilnehmeranschlußvorrichtung 2 nach Figur 2 angeordnet. Die Anordnung ist dem Fachmann bekannt, weshalb auf eine ausführliche Erläuterung verzichtet wird. Erfindungsgemäß kann bei einem derartigen Modem eine der zweiten Leitungsanpassungseinrichtung 5' nachgeschaltete Signalverarbeitung so betrieben werden, daß sie auch analoge Eingangsignale verarbeiten kann, die mit einer linearen Quantisierungskennlinie auf die analoge Schnittstelle 12 gegeben wurden. Demnach kann in einem derartig aufgebauten Kommunikationskanal zwischen der zweiten Teilnehmerendstelle 9 eine Pulsamplitudenmodulation eingesetzt werden. Der PAM-Codierer 10 in der zweiten Teilnehmerendstelle 9 codiert dabei die an den Codierer 10 eingegebenen Daten auf eine Weise, daß sie in der Leitungsanpassungseinrichtung 4 mittels linearer Quantisierungskennlinie in einen geeigneten Analogwert gewandelten werden können. Die so codierten PCM-Daten werden transparent über die Leitung 15, und sodann transparent durch die Vermittlungsstellen 6 und 8 zur Leitung 13 transportiert. Die codierten PCM-Daten werden in der Leitungsanpassungseinrichtung 4 der Teilnehmeranschlußvorrichtung 2 mit linearer Quantisierungskennlinie in ein analoges Signal gewandelt, um über die analoge Teilnehmerleitung 12 zur ersten Teilnehmerendstelle 1 übertragen zu werden. Dort werden diese Daten von der dortigen Gabelschaltung 3' auf die dortige zweite Leitungsanpassungseinrichtung 5' geführt, die aus dem analogen Signal durch A/D-Wandlung mit linearer Quantisierungskennlinie die vom PCM-Codierer 10 abgegeben PCM-Daten wiedergewinnt. An der Leitungsanpassungseinrichtung 5' im Modem 1 können dann die wieder gewonnen PCM-Daten an einer Leitung 14' abgegriffen werden, um an eine Datensenke übergeben zu werden.

Die Umsetzeinrichtung 20 bzw. 21 in der Teilnehmeranschlußvorrichtung 2 hat die Aufgabe, zwischen den linear Werten mit einer Bitbreite von 12 - 16 Bit auf Seiten des D/A-Wandlers 18 bzw. des A/D-Wandler 19 und den Werten mit einer Bitbreite von 8 Bit auf Seiten der Vermittlungsstelle 6 umzusetzen. In der Kommunikationsrichtung von der analogen Schnittstelle 12 zur digitalen Schnittstelle 14 werden die Daten immer mit einer logarithmischer Quantisierungskennlinie nach G.711 umgesetzt. In der entgegengesetzten Kommunikationsrichtung von der digitalen Schnittstelle 13 zur analogen Schnittstelle 12 werden die Daten entweder mit einer logarithmischer Quantisierungskennlinie nach G.711 oder mit einer linearen Quantisierungskennlinie umgesetzt. Die zuletzt genannte Skalarumsetzung kann beispielsweise dadurch realisiert werden, daß die Daten mit einer Bitbreite von 8 Bit von der digitalen Schnittstelle 13 an acht wertemäßig aufeinanderfolgende Bit des D/A-Wandler 18 von einer Bitbreite von 16 Bit angeschlossen werden. Dabei müssen die Bits zwischen dem Vorzeichenbit des D/A-Wandlers 18 und des als Vorzeichen interpretierten Bits der 8-Bit-Darstellung auf der digitalen Schnittstelle 13 jeweils mit demselben Wert besetzt werden.

Mit der Auswahl von acht wertemäßig aufeinanderfolgenden Bits des D/A-Wandlers 18 mit einer Bitbreite von beispielsweise 16 Bit wird die Sendeleistung der analogen Signale bestimmt. Mit jedem Bitabstand zwischen dem höchstwertigen Bit des 16-Bit-Lineareingangs des D/A-Wandlers 18 und dem Block der Digitaldaten mit einer Bitbreite von 8 Bit von der Schnittstelle 13 sinkt die Sendeleistung um 6 dB ab. Eine weitere Möglichkeit die Sendeleistung einzustellen besteht darin, dem D/A-Wandler 18 Verstärkungskorrekturfaktoren einzugeben, wenn der Betriebsmodus mit linearer Quantisierungkennlinie ausgewählt wird. Beide Möglichkeiten können auch miteinander verknüpft werden. So kann die Auswahl der 8-Bit breiten Gruppe aus den 16 digitalen Eingangsbit des D/A-Wandlers 18 als Grobeinstellung in 6 dB Schritten dienen, während eine Feineinstellung 0 - 6 dB mittels einer Verstärkungskorrektur im D/A-Wandlers 18 realisiert wird.

Es wird nun auf die Codierkennlinien von Figur 3 bezug genommen. Die als A-Gesetz gekennzeichnete Linie gibt den positiven Ast der Expansionskennlinie nach ITU G.711 an (zur besseren Darstellung wurde die in G.711 für das A-Gesetz geforderte EXOR-Verknüpfung mit dem Hexadezimalwert 0x55 nicht berücksichtigt). Die beiden oberen Segmente (32 Werte zwischen E0 und FF) sind für die Pulsamplitudenmodulation nicht geeignet. In diesem Bereich sind die Amplitudenunterschiede sehr groß. Die Verwendung der Werte aus diesen Segmente würde zu einer zu hohen Sendeleistung (etwa -4 dBm anstelle der typischerweise von den nationalen Behörden erlaubten -10 bis -12 dBm) führen, wenn bestimmte Codes der Pulsamplitudenmodulation mit einer besonderen Häufung auftreten.

Die Codes für kleine Amplituden können ebenfalls nicht verwendet werden, da sie beim Empfänger nicht mehr eindeutig aus dem Störgeräusch der Leitung rekonstruiert werden können. In der Praxis können somit nur zwei bis vier Werte von den insgesamt 16 möglichen verwendet werden. Für den praktischen Einsatz bleibt somit der Bereich von A0 bis E0 (Werte in Hexadezimaldarstellung). Diese 64 Werte ergeben, verdoppelt für positive und negative Amplituden, insgesamt 128 verfügbare PAM- Codes, und damit eine maximale Übertragungsrate von 56 kBit/s. Dies trifft in gleicher weise bei der Verwendung der logarithmischen Quantisierungskennlinie nach dem µ-Gesetz zu.

Bei der Verwendung einer linearen Digital/Analog-Umsetzung mit einer Bitbreite von 8-Bit ergibt sich eine Umsetzung wie durch die in Figur 3 gezeigten Geraden. Die Geraden Lin-0 bis Lin-2 unterscheiden sich in der Zuordnung der Daten mit einer Bitbreite von 8-Bit von der Schnittstelle 13 an den Lineareingang des D/A-Wandlers 18 mit einer Bitbreite von 16-Bit. So ergibt sich bei Verwendung der Skalierung nach der Geraden Lin-2 eine Sendeleistung von etwa -10,6 dBm, bei Verwendung der Skalierung nach der Geraden Lin-1 ergibt sich eine Leistung von -4,7 dBm, und bei Verwendung der Geraden Lin-0 ergibt sich eine Sendeleistung von 1,4 dBm. Eine Feineinstellung zwischen diesen Werten kann ohne Verlust von Codes durch eine programmierbare Verstärkungskorrektur im D/A-Wandler 18 in Schritten von 1 dB erfolgen.

Die Schrittweiten der kleinen Codes verhalten sich zueinander wie folgt:
Linear (Lin-2) : A-Gesetz : µ-Gesetz = 16 : 2 : 1.

Daraus ist erkennbar, daß der minimale Abstand zwischen zwei Werten bei einer linearen Quantisierung mit der Kennlinie Lin-2 achtmal so groß ist, wie bei der Quantisierung nach dem A-Gesetz. Unter Berücksichtigung einer Korrektur der Verstärkungsfaktoren im D/A-Wandler 18 auf eine Weise, daß die mittlere Sendeleistung bei linearer Quantisierung den Wert von -12 dBm nicht überschreitet, erhält man ein Verhältnis
Linear : A-Gesetz : µ-Gesetz = 13,6 : 2 : 1.

Da sich die Amplitudenstufen bei linearer Quantisierung wesentlich stärker voneinander unterscheiden lassen, ist der Einfluß von Leitungsstörungen bei Verwendung einer linearen Quantisierung deutlich vermindert.

Ein weiterer Vorteil der Verwendung eine linearen Quantisierungskennlinie besteht in dem Verhältnis von maximaler Leistung zu mittlerer Leistung. Es wird eine gleichwahrscheinliche Folge digitaler Daten mit einer Bitbreite von 8-Bit angenommen, die über einen Zeitraum von 6 s gemittelt werden. Als Verhältnis von Maximalleistung zu mittlerer Leistung ergibt sich somit:
- Pmax/Pmean =: 4,8 dB bei ein 8-Bit-Linearquantisierung
10 dB bei A-Gesetz-Quantisierung
10 dB bei µ-Gesetz-Quantisierung
8,8 dB bei µ-Gesetz-Quantisierung ohne Verwendung der beiden oberen Segmente.

In der Praxis wird ein möglichst kleiner Wert für Pmax/Pmean angestrebt, da Signalspitzen die Komponenten des Übertragungsweges (D/A- bzw. A/D-Wandler und Übertrager an der analogen Schnittstelle 12) stärker in den nicht nichtlinearen Bereich dieser Komponenten aussteuern, wodurch Verzerrungen verursacht werden, die die maximal erreichbare Datenrate vermindern.

Neben der Umsetzung in 256 Schritte bietet die Umsetzeinrichtung 20 wahlweise die Möglichkeit, den Aussteuerbereich in eine von 256 abweichende Anzahl von äquidistanten Schritten einzuteilen. Dazu enthält die Umsetzeinrichtung 20 eine Umrechnungseinrichtung, die aus den digitalen Werten von der Schnittstelle 13 mit einer Bitbreite von 8-Bit die entsprechenden Linearwerte mit einer Bitbreite von 12 bis 16-Bit berechnet und ggf. Verstärkungselemente entsprechend einstellt.

Zunächst ist die Umsetzung unter Verwendung einer linearen Quantisierungskennlinie nur für die Kommunikationsrichtung vorgesehen, in der eine Pulsamplitudenmodulation durchgeführt wird. In einer Weiterentwicklung der Standardisierung einer Modemkommunikation mit Pulsamplitudenmodulation ist es möglich, auch in der entgegengesetzten Kommunikationsrichtung von der ersten Teilnehmerendstelle 1 über die analoge Schnittstelle 12, die Leitungsanpassungseinrichtung 5, die Schnittstelle 14 und die Schnittstelle 16 zur zweiten Teilnehmerendstelle 9 eine Pulsamplutidenmodulation durchzuführen. Eine lineare Quantisierungskennlinie wird dann sowohl in der Umsetzeinrichtung 20 als auch in der Umsetzeinrichtung 21 eingesetzt.

Es wird nun der Ablauf beim Aufbau einer Modemverbindung beschrieben. Zu Beginn wird die Verbindung durch ein Wählverfahren in einem vermittelnden Kommunikationssystem aufgebaut. Nach Verbindungsaufbau wird mittels einer Signalanalyse nach typischen Modemsignalen in beiden Kommunikationsrichtungen gesucht, anhand derer die Erkennungseinrichtung 17 eine Modemverbindung feststellen kann. Dies kann beispielsweise der Antwortton ANSam am Anfang einer Datenübertragung nach ITU-V.8 sein. Zu diesem Zeitpunkt sind in den Umsetzeinrichtungen 20 und 21 noch die herkömmlichen logarithmischen Quantisierungskennlinien aktiviert.

Die Teilnehmerendstellen 1 und 9 durchlaufen dann die Phase I nach ITU-T V.8und die Phase II des Verbindungsaufbaus nach ITU-T V.34 bzw. V.PCM der Studiengruppe 16 der ITU. Die dabei übertragenen Werte werden von der Erkennungseinrichtung 17 ausgewertet und steuern im bevorzugten Ausführungsbeispiel die Umsetzeinrichtung 20. Wird zwischen den Teilnehmerendstellen bzw. Modems 1 und 9 eine Pulsamplitudenmodulation vereinbart, so wird vor der Phase III nach nach V.34 bzw. V.PCM die Umsetzeinrichtung 20 derart aktiviert, daß sie auf eine lineare Quantisierungskennlinie umschaltet. Die Modems 1 und 9 erkennen die lineare Quantisierungskennlinie und stimmen ihre weitere Trainingssequenz beim Verbindungsaufbau darauf ab. Während einer laufenden Datenübertragung von Nutzdaten bleibt das Verhalten der Umsetzeinrichtung 17 unverändert. Nach Beendigung der Verbindung wird wieder die logarithmische Quantisierungskennlinie als Grundeinstellung gewählt. Erfolgt im Verlaufe einer Modemverbindung eine Anforderung auf ein sogenanntes Retraining (das heißt erneutes Durchlaufen der Verbindungsaufbauphasen II und III nach V.34 bzw. V.PCM), so stellt die Umsetzeinrichtung 17 zunächst eine logarithmische Quantisierungskennlinie ein und wertet wiederum am Ende der Phase II aus, ob die Modems 1 und 9 eine Pulsamplitudenmodulation vereinbart haben, und stellt die Umsetzeinrichtung 17 entsprechend ein.

Einzelheiten zum Verbindungsaufbau nach ITU V.8, V.34 und V.PCM wurden von der Studiengruppe ITU-SG 16 mit einem Entwurf vom 12. September 1997 erarbeitet, der der ITU vorgelegt wurde. Die hier verwendeten Begriffe nehmen auf diesen Standardisierungsentwurf bezug.

## Patentansprüche

1. Teilnehmeranschlußvorrichtung zur Verbindung einer Teilnehmerleitung (12) mit einem Vermittlungssystem (6) in einem Telekommunikationssystem, mit einer ersten (4) und einer zweiten (5) Leitungsanpassungseinrichtung für die jeweiligen Kommunikationsrichtungen, wobei die erste Leitungsanpassungseinrichtung (4) einen D/A- Wandler mit logarithmischer Quantisierungskennlinie und die zweite Leitungsanpassungseinrichtung (5) einen A/D-Wandler mit logarithmischer Quantisierungskennlinie aufweist, wobei der D/A- Wandler und der A/D-Wandler analogseitig über eine Gabelschaltung (3) zur Zweidraht-Vierdraht-Umsetzung mit der Teilnehmerleitung (12) verbunden sind,
**dadurch gekennzeichnet,** daß
wenigstens die erste Leitungsanpassungseinrichtung (4) wahlweise in einen Betrieb mit linearer Quantisierungskennlinie umschaltbar ist.

2. Vorrichtung nach Patentanspruch 1,
**dadurch gekennzeichnet,** daß
die erste Leitungsanpassungseinrichtung (4) einen linearen D/A- Wandler (18) mit vorgeschalteter erster Umsetzeinrichtung (20) aufweist, die zwischen linearer und logarithmischer Kennlinie umschaltbar ist.

3. Vorrichtung nach einem der Patentansprüche 1 oder 2,
**dadurch gekennzeichnet,** daß
eine Erkennungseinrichtung (17), an die die digitalen Daten in beiden Kommunikationsrichtungen eingegeben werden.

4. Vorrichtung nach Patentanspruch 3,
**dadurch gekennzeichnet,** daß
die Erkennungseinrichtung (17) die digitalen Daten daraufhin untersucht, ob von den Teilnehmerendstellen (1, 9) eines Kommunikationskanals eine lineare oder eine logarithmische Quantisierungskennlinie vereinbart wird.

5. Vorrichtung nach Patentanspruch 4,
**dadurch gekennzeichnet,** daß
die Quantisierungskennlinie von zumindest der ersten Leitungsanpassungseinrichtung (4) abhängig vom Ergebnis der Erkennungseinrichtung eingestellt wird.

6. Modem zur Verbindung einer Teilnehmerleitung eines Telekommunikationssystems mit einem Datenendgerät, mit einer ersten und einer zweiten Leitungsanpassungseinrichtung für die jeweiligen Kommunikationsrichtungen, wobei die erste Leitungsanpassungseinrichtung einen D/A- Wandler mit linearer Quantisierungskennlinie und die zweite Leitungsanpassungseinrichtung einen A/D-Wandler mit linearer Quantisierungskennlinie aufweist, wobei der D/A- Wandler und der A/D-Wandler analogseitig über eine Gabelschaltung zur Zweidraht-Vierdraht-Umsetzung mit der Teilnehmerleitung verbunden sind,
**dadurch gekennzeichnet,** daß
wenigstens die dem A/D-Wandler nachgeschaltete Signalverarbeitung in einen Betrieb zur für Analogsignale mit linearer Quantisierungskennlinie umschaltbar ist.

7. Modern nach einem der Patentansprüche 6,
**dadurch gekennzeichnet,** daß
das Modern eine Einrichtung zum Verhandeln des Übertragungsmodus mit einer Gegenstelle und zum Einstellen der Quantisierungskennlinie entsprechend dem Verhandlungsergebnis aufweist.

8. Verfahren in einem Telekommunikationssystem, an das eine Vielzahl von Teilnehmerendstellen (1, 9) über analoge oder digitale Teilnehmerschnittstellen (12; 15,16) angeschlossen ist, wobei ausgewählte Teilnehmerendstellen (1, 9) über individuell einrichtbare Kommunikationskanäle miteinander in Kommunikation treten können, zum Umschalten zwischen einer linearen und einer logarithmischen PCM-Codierung bei der digitalen Darstellung der Signale in einem Kommunikationskanal, wobei das Verfahren folgende Schritte aufweist:
- Einstellen einer PCM-Codierung mit logarithmischer Quantisierung in dem Kommunikationskanal;
- Abhören des Datenverkehrs zwischen den Teilnehmerendstellen (1, 9) des Kommunikationskanals; und
- bei Feststellung eines vorbestimmten Codewortes oder vorbestimmter Codesequenzen im Datenverkehr, Einstellen einer PCM-Codierung mit linearer Quantisierung in zumindest einer Kommunikationsrichtung.

9. Verfahren nach Patentanspruch 8,
**gekennzeichnet durch**
einen nachfolgenden Schritt des Ausgebens eines Quittungssignals an die Teilnehmerendstellen (1, 9).

10. Verfahren nach einem der Patentansprüche 8 oder 9,
**dadurch gekennzeichnet,** daß
nach Beendigung der Verbindung zwischen den Teilnehmerendstellen (1, 9) und nach Abbau des Kommunikationskanals ein Schritt des Einstellens einer logarithmischen Kennlinie folgt.

11. Telekommunikationssystem, an das eine Vielzahl von Teilnehmerendstellen (1, 9) über analoge oder digitale Teilnehmerschnittstellen (12; 15, 16) angeschlossen ist, wobei ausgewählte Teilnehmerendstellen über individuell einrichtbare Kommunikationskanäle miteinander in Kommunikation treten können, wobei analoge Signale in den Kommunikationskanälen des Systems digital mit einer PCM-Codierung mit logarithmischer Quantisierung dargestellt sind,
**dadurch gekennzeichnet,** daß
die Signale in den Kommunikationskanälen des Systems wahlweise, individuell in zumindest einer Kommunikationsrichtung mit einer PCM-Codierung mit linearer Quantisierung darstellbar sind.
